# EUROPEAN PATENT APPLICATION

(11) **EP 1 628 487 A2**
(43) Date of publication of application: **22.02.2006**
(21) Application number: 05253576.2
(22) Date of filing: 10.06.2005
(51) Int. Cl.: H04N 7/26, H04N 7/36

(54) **Method and apparatus for estimating motion**

(30) Priority: 11.06.2004 KR 2004042918
(71) Applicant: SAMSUNG ELECTRONICS CO., LTD., Suwon-si, Gyeonggi-do (KR)
(72) Inventor: Lee, Nam-suk, Yeongtong-gu, Suwon-si Gyeonggi-do (KR); Lee, Jae-hun, Yongin-si Gyeonggi-do (KR)
(74) Representative: Robinson, Ian Michael

(57) **Abstract**

An ME method and an apparatus thereof for use in an image codec. The ME method includes: selecting at least one prediction mode whose integer pixel motion estimation (IPME) result cost is relatively low among a plurality of prediction modes based on IPME results for each of the plurality of prediction modes including blocks of various sizes; and performing a sub-pixel motion estimation (SPME) using the selected at least one prediction mode.

## Description

The present invention relates to an image compressor/decompressor (codec), and more particularly, to a method of and an apparatus for estimating a motion for use in encoding image data.

The H.264/moving picture experts group-4 (MPEG-4) video codec of International Telecommunications Union - Telecommunication Standardization Sector (ITU-T)/ISO/IEC compresses video data by performing a prediction process on sample data by block unit to obtain a prediction block including prediction samples, and transforming and quantizing the same.

For the prediction methods, there are two methods, i.e., an intra-prediction and an inter-prediction. The inter-prediction performs prediction by performing motion compensation/estimation with reference to a reference picture that has passed through an encoding/decoding process and a deblocking filtering. The intra-prediction performs prediction using data of neighboring blocks already encoded, inside a current picture. Video data compressed by passing through a prediction process, and a transformation & quantization process, is compressed again through an entropy coding process to become a bit stream conforming to the H.264 standard.

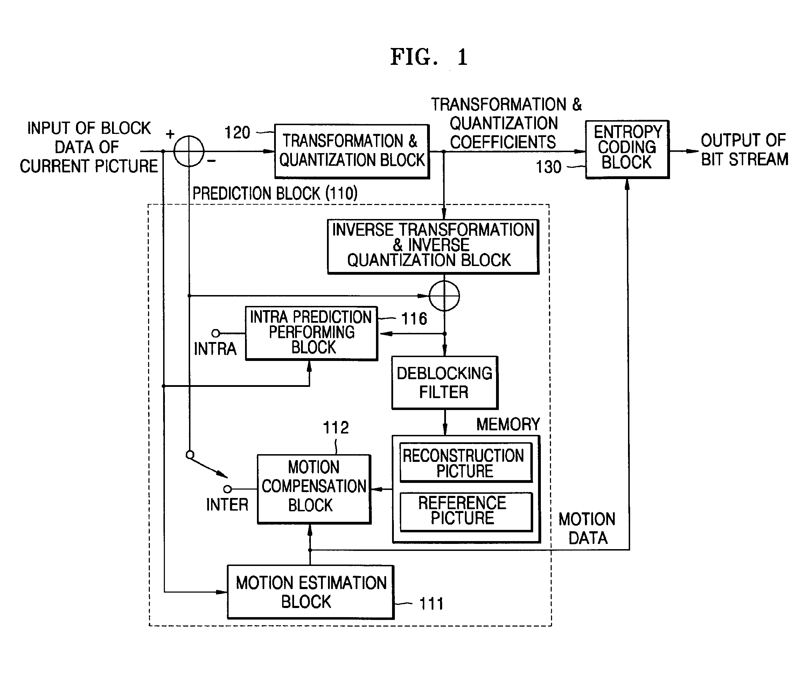

Figure 1 is a block diagram of an H.264 encoder.

Referring to Figure 1, the H.264 encoder has a prediction block 110, a transformation & quantization block 120; and an entropy coding block 130.

The prediction block 110 performs the inter-prediction and the intra-prediction. The inter-prediction means performing a block prediction on a current picture using a reference picture for which decoding has been already performed and a deblocking filtering has been performed and stored in a buffer. Namely, a prediction is performed using information between pictures. For that purpose, a motion estimation (ME) block 111 and a motion compensation (MC) block 112 are provided. The intra-prediction means performing a block prediction using pixel data of a block adjacent to the block to predict, inside a picture already decoded. For that purpose, an intra-prediction performing block 116 is provided. The intra-prediction and/or the inter-prediction are performed depending on a picture's attribute such as an I-picture, a P-picture, and a B-picture.

The transformation & quantization block 120 transforms and quantizes a prediction sample obtained by performing prediction at the prediction block 110, and compresses the same.

The entropy coding block 130 performs encoding with respect to a quantized image data according to a specified method so as to output a bit stream conforming to the H.264 standard.

More specifically, the pictures are divided into an I-picture compressed into an integer pixel, a P-picture for which only prediction of a forward direction has been performed, and a B-picture for which prediction of a reverse direction and interpolation prediction have been performed, according to the pictures' characteristics.

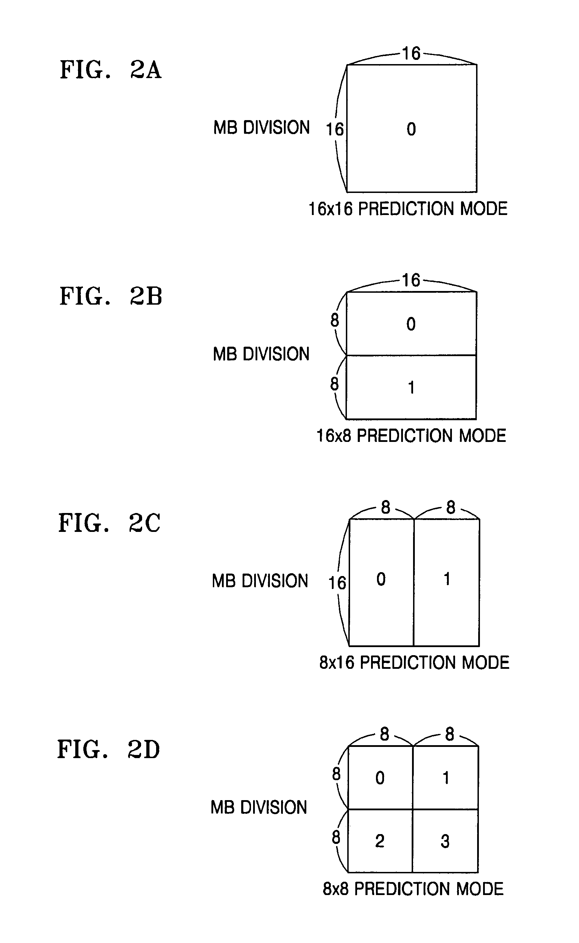

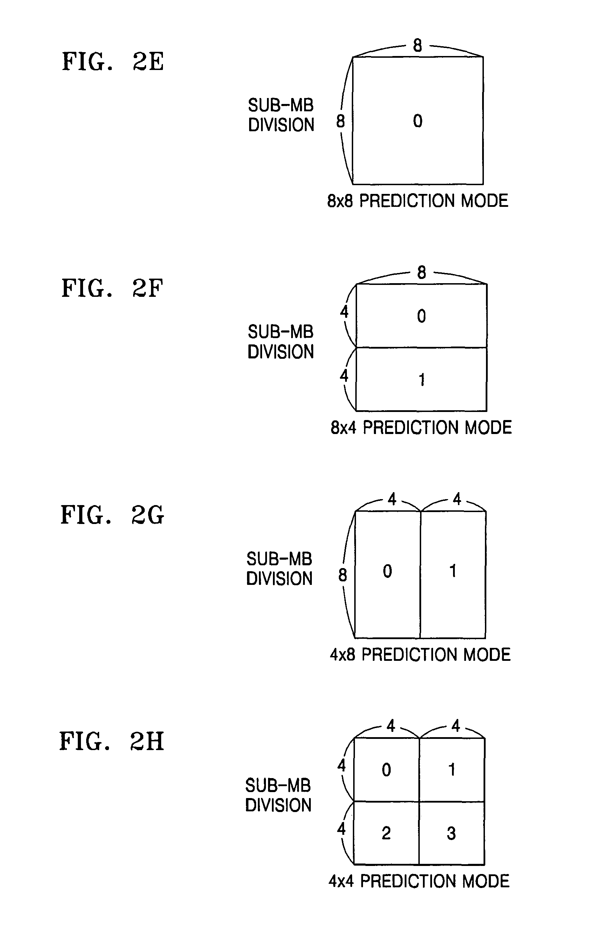

Figure 2 is a view showing prediction modes according to division of a macro-block and a sub-macro-block according to the H.264 codec.

Referring to Figures 2A-2H, prediction modes representing possible shapes and sizes of blocks in case of performing the inter-prediction are shown. For the possible prediction modes, there exist a 16x16 prediction mode (Figure 2A), a 16x8 prediction mode (Figure 2B), an 8x16 prediction mode (Figure 2C), and an 8x8 prediction mode (Figure 2D) with respect to a macro-block (MB). Also, there exist an 8x4 prediction mode (Figure 2F), a 4x8 prediction mode (Figure2G), and a 4x4 prediction mode (Figure 2H) with respect to the 8x8 sub-MB (Figure 2E).

The inter-prediction block of Figure 1 can perform prediction by any of the above-described seven prediction modes. For example, in case of the 8x8 prediction mode, four 8x8 blocks inside the macro-block can have motion vectors, respectively. Also, the respective 8x8 blocks can be divided again into a small block unit so that prediction may be performed. Accordingly, it is possible to increase a compression efficiency by selecting an efficient prediction mode according to a characteristics of a given picture.

Further, the inter-prediction of the respective prediction mode performs a sub pixel motion estimation (SPME) with a pixel of the lowest cost focused, after performing an integer pixel motion estimation (IPME). After performing the IPME and the SPME, the inter-prediction of the respective prediction mode compares the respective cost value so as to determine a prediction mode having the lowest cost for a final prediction mode. Namely, the H.264/MPEG-4 video codec tries the above-described seven prediction modes when performing the inter-prediction with respect to the P-picture or the B-picture and selects a prediction of the lowest cost among them. At this point, the IPME is performed for the respective prediction mode to obtain costs and the obtained respective costs are compared so that an integer pixel motion vector of the lowest cost is found and the SPME is performed with that integer pixel of the lowest cost focused.

As described above, an increase in a number of the prediction modes for the inter-prediction in the H.264 codec has considerably increased complexity of the SPME as well as the IPME. Also, the SPME finds a neighboring half pixel around an obtained integer pixel with the obtained integer pixel focused and finds again a motion vector of one fourth of the pixel with the half pixel focused. Accordingly, as a number of the prediction modes for the integer pixel increases, a complexity of the SPME increases. Further, unlike the case that a codec of different standard according to the related art obtains video data of a half pixel using a linear interpolation filter, the H.264 codec has increased a complexity of the SPME considerably by using a 6 tap filter.

According to the present invention there is provided an apparatus and method as set forth in the appended claims. Preferred features of the invention will be apparent from the dependent claims, and the description which follows.

To address the above and or other problems, an aspect of the present invention provides an ME method and an apparatus thereof, capable of reducing a complexity of an SPME in an image encoder.

According to an aspect of the present invention, there is provided a motion estimation (ME) method including: selecting at least one prediction mode whose integer pixel motion estimation (IPME) result cost is relatively low among a plurality of prediction modes based on IPME results for each of the plurality of prediction modes including blocks of various sizes; and performing a sub-pixel motion estimation (SPME) using the selected at least one prediction mode.

The plurality of prediction modes may include a 16x16 prediction mode, a 16x8 prediction mode, an 8x16 prediction mode, an 8x8 prediction mode, an 8x4 prediction mode, a 4x8 prediction mode, and a 4x4 prediction mode.

Also, for the prediction mode for which the SPME is performed, a 16x16 prediction mode, a 16x8 prediction mode, and an 8x16 prediction mode may be selected, and one prediction mode having the lowest IPME result cost may be also selected among an 8x8 prediction mode, an 8x4 prediction mode, a 4x8 prediction mode, and a 4x4 prediction mode.

Also, for the prediction mode for which the SPME is performed, a 16x16 prediction mode may be selected, and one prediction mode having the lowest IPME result cost may be selected among a 16x8 prediction mode and an 8x16 prediction mode, and one prediction mode having the lowest IPME result cost may be selected among an 8x8 prediction mode, a 8x4 prediction mode, a 4x8 prediction mode, and a 4x4 prediction mode.

Also, for the prediction mode for which the SPME is performed, one prediction mode of the lowest IPME result cost may be selected among a 16x16 prediction mode, a 16x8 prediction mode, and an 8x16 prediction mode, and one prediction mode having the lowest IPME result cost may be selected among an 8x8 prediction mode, a 8x4 prediction mode, a 4x8 prediction mode, and a 4x4 prediction mode.

Also, for the prediction mode for which the SPME is performed, one prediction mode having the lowest IPME result cost may be selected among a 16x16 prediction mode, a 16x8 prediction mode, and an 8x16 prediction mode, an 8x8 prediction mode, an 8x4 prediction mode, a 4x8 prediction mode, and a 4x4 prediction mode.

The IPME and the SPME may conform to the H.264 standard.

According to another aspect of the present invention, there is provided a method of encoding video, including: performing an integer pixel motion estimation (IPME) on each of a plurality of prediction modes having blocks of various sizes; selecting at least one prediction mode whose cost is relatively low among the plurality of prediction modes, using IPME result costs; and performing a sub-pixel motion estimation (SPME) using the selected at least one prediction mode.

According to another aspect of the present invention, there is provided an ME apparatus including: a prediction mode selection section selecting at least one prediction mode whose integer pixel motion estimation (IPME) result costs are relatively low from among a plurality of prediction modes, using IPME results for a plurality of prediction modes including blocks of various sizes; and a sub-pixel motion estimation section performing a sub-pixel motion estimation (SPME) using the selected at least one prediction mode.

According to another aspect of the present invention, there is provided an apparatus for encoding a video, including a motion estimation (ME) block: performing an integer pixel motion estimation (IPME) with respect to each of a plurality of prediction modes having blocks of various sizes; selecting at least one prediction mode whose cost is relatively low among a plurality of prediction modes, using IPME result costs; and performing a sub-pixel motion estimation (SPME) using the selected at least one prediction mode.

According to another aspect of the present invention, there is provided a motion estimation apparatus, including: an integer pixel motion estimation block performing motion estimation for an integer pixel of a signal; a cost calculating section calculating costs of the integer pixel motion estimation; a prediction mode selecting section selecting at least one prediction mode to be used for sub-pixel motion estimation according to costs of the integer pixel motion estimation; and a sub-pixel motion estimation section performing motion estimation on a sub-pixel of the integer pixel using the selected at least one prediction mode.

Additional and/or other aspects and advantages of the present invention will be set forth in part in the description which follows and, in part, will be obvious from the description, or may be learned by practice of the invention.

These and/or other aspects and advantages of the present invention will become apparent and more readily appreciated from the following detailed description, taken in conjunction with the accompanying drawings of which:
Figure 1 is a block diagram of an H.264 encoder;
Figures 2A - 2H are views showing prediction modes according to division of a macro-block and a sub-macro-block according to the H.264 codec;
Figure 3 is a block diagram showing a ME apparatus according to an embodiment of the present invention;
Figure 4 is a flowchart showing a ME method according to an embodiment of the present invention;
Figure 5 is a flowchart showing an example of a mode selection operation shown in Figure 4;
Figure 6 is a flowchart showing another example of a mode selection operation shown in Figure 4;
Figure 7 is a flowchart showing still another example of a mode selection operation shown in Figure 4; and
Figure 8 is a flowchart showing yet still another example of a mode selection operation shown in Figure 4.

Reference will now be made in detail to an embodiment of the present invention, examples of which are illustrated in the accompanying drawings, wherein like reference numerals refer to the like elements throughout. The embodiment is described below in order to explain the present invention by referring to the figures.

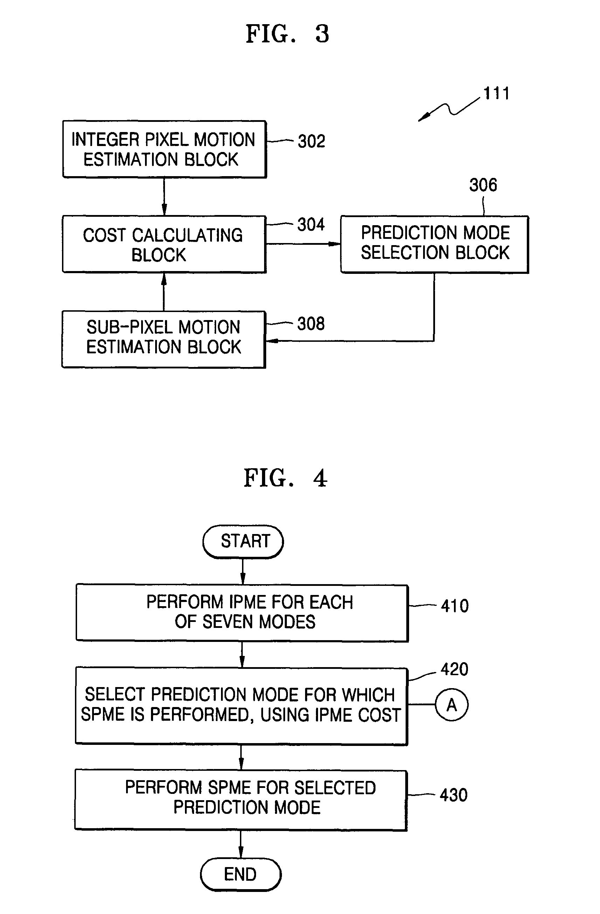

Figure 3 is a block diagram showing a motion estimation (ME) apparatus according to an embodiment of the present invention.

Referring to Figure 3, the ME apparatus has: an IPME block 302; a cost calculating block 304; a prediction mode selection block 306; and an SPME block 308.

The IPME block 302 performs ME for an integer pixel and the cost calculating block 304 calculates costs according to the IPME or the SPME results. The prediction mode selection block 306 selects a prediction mode for which the SPME is performed, using the costs calculated as a result of the IPME. The SPME 308 performs an ME with respect to the selected prediction mode.

Accordingly, since a number of prediction modes for which the SPME is performed is reduced using the IPME result cost, a complexity of the SPME can be reduced.

Figure 4 is a flowchart showing an ME method according to an embodiment of the present invention.

Referring to Figure 4, IPME is performed with respect to each of the following seven prediction modes: a 16x16 prediction mode for a macro-block; a 16x8 prediction mode for a macro-block; an 8x16 prediction mode for a macro-block; an 8x8 prediction mode for a macro-block; an 8x4 prediction mode for a sub macro-block; a 4x8 prediction mode for a sub macro-block; and a 4x4 prediction mode for a sub macro-block. (operation 410). After that, a cost is calculated using the IPME result and at least one or more prediction modes for which the SPME is performed, are selected using the calculated cost (operation 420). A method for selecting a prediction mode will be described in more detail later. The SPME is performed with respect to the selected prediction mode (operation 430).

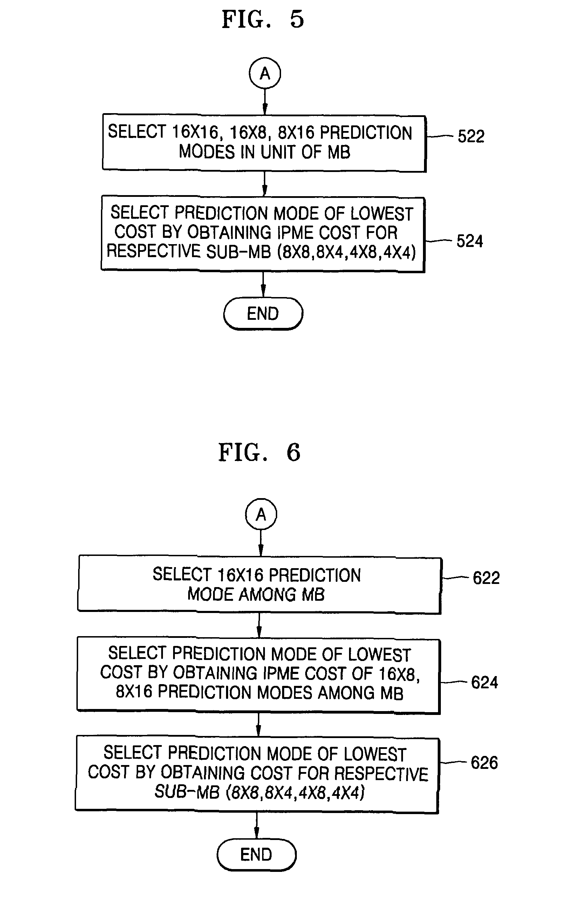

Figure 5 is a flowchart showing an example of the mode selection operation shown in Figure 4.

Referring to Figures 4 and 5, an example of selecting a prediction mode for which the SPME is performed, using a calculated IPME cost, is shown.

First, the IPME is performed with respect to the seven prediction modes as described in detail in the operation 410 of Figure 4. The 16x16 prediction mode, the 16x8 prediction mode, and the 8x16 prediction mode perform a prediction by unit of a macro-block (MB). For convenience in explanation, the IPME result cost is denoted by costMB16×16, costMB16×8, costMB8x16. Also, the 8x8 prediction mode, the 8x4 prediction mode, the 4x8 prediction mode, and the 4x4 prediction mode perform a prediction by unit of sub-MB 8x8. For convenience in explanation, the IPME result cost is denoted by costSubMB8x8, costSubMB8x4, costSubMB4x8, costSubMB4x4.

Now, the prediction mode for which the SPME is performed, is selected using a method that will be described below (operation 420).

First, since the 16x16 prediction mode is mainly selected in the inter-prediction, the 16x16 prediction mode, the 16x8 prediction mode, and the 8x16 prediction mode in unit of an MB are selected (operation 522).

Also, the IPME result costs for the 8x8 prediction mode, the 8x4 prediction mode, the 4x8 prediction mode, and the 4x4 prediction mode are compared for each sub-MB so that minimum values, i.e., min(costSubMB8x8, costSuMB8x4, costSubMB4x8, costSubMB4x4) is obtained and a prediction mode whose cost is lowest is selected (operation 524). Since the prediction mode is obtained for the respective sub-MB, four sub-prediction modes can be obtained.

Therefore, for the finally selected prediction modes, four prediction modes including the 16x16 prediction mode, the 16x8 prediction mode, the 8x16 prediction mode, a prediction mode having the 8x8 or less, can be selected. Accordingly, instead of performing the SPME with respect to the seven prediction modes, respectively, the SPME can be performed for the selected four prediction modes only (operation 430), so that a complexity of the ME apparatus is reduced.

Figure 6 is a flowchart showing another example of the mode selection operation shown in Figure 4.

Referring to Figures 4 and 6, first, since the 16x16 prediction mode is mainly selected in the inter-prediction, the 16x16 prediction mode in unit of an MB is selected (operation 622). Next, the IPME result costs for the 16x8 prediction mode, the 8x16 prediction mode are obtained so that prediction modes having minimum costs, i.e., min(costMB16x8, costMB8x16) are selected (operation 624). Then, the IPME result costs for the 8x8 prediction mode, the 8x4 prediction mode, the 4x8 prediction mode, and the 4x4 prediction mode are compared for each sub-MB so that minimum values, i.e., min (costSubMB8×8, costSuMB8x4, costSubMB4x8, costSubMB4x4) are obtained and a prediction mode whose cost is lowest is selected (operation 626). Since the prediction mode is obtained for the respective sub-MB, four sub-prediction modes can be obtained.

Therefore, for the finally selected prediction modes, three prediction modes including the 16x16 prediction mode, either of the 16x8 prediction mode or the 8x16 prediction mode, and a prediction mode having the 8x8 or less, can be selected. Accordingly, instead of performing the SPME with respect to the seven prediction modes, respectively, the SPME can be performed for the selected three prediction modes only (operation 430), so that a complexity of the ME apparatus is reduced.

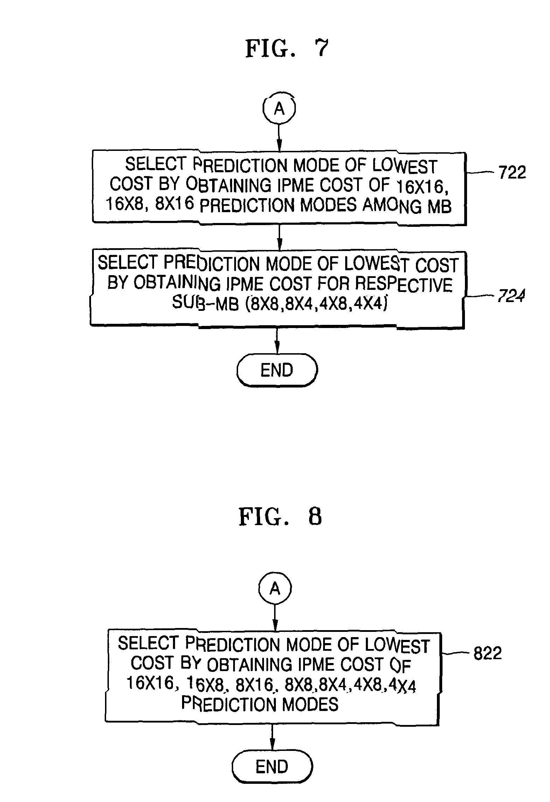

Figure 7 is a flowchart showing still another example of the mode selection operation shown in Figure 4.

Referring to Figures 4 and 7, the IPME result costs for the 16x16 prediction mode, the 16x8 prediction mode, and the 8x16 prediction mode among the MBs are obtained so that prediction modes having minimum costs, i.e., min(costMB16x16, costMB16x8, costMB8x16) are selected (operation 722). Also, the IPME result costs for the 8x8 prediction mode, the 8x4 prediction mode, the 4x8 prediction mode, and the 4x4 prediction mode are compared for the respective sub-MB so that minimum costs, i.e., min(costSubMB8x8, costSuMB8x4, costSubMB4x8, costSubMB4x4) are obtained and one prediction mode whose cost is lowest is selected (operation 724).

Therefore, for the finally selected prediction modes, two prediction modes including one among the 16x16 prediction mode, the 16x8 prediction mode, the 8x16 prediction mode, and a prediction mode having the 8x8 or less, can be selected. Accordingly, instead of performing the SPME with respect to the seven prediction modes, respectively, the SPME can be performed for the selected two prediction modes only (operation 430), so that a complexity of the ME apparatus is reduced.

Figure 8 is a flowchart showing another example of the mode selection operation shown in Figure 4.

Referring to Figures 4 and 8, the IPME result costs for the 16x16 prediction mode, the 16x8 prediction mode, the 8x16 prediction mode, the 8x8 prediction mode, the 8x4 prediction mode, the 4x8 prediction mode, and the 4x4 prediction mode among the MBs or the sub-MBs, are compared so that minimum costs, i.e., min(costMB16x16, costMB16x8, costMB8x16, costSubMB8x8, costSuMB8x4, costSubMB4x8, costSubMB4x4) are obtained and one prediction mode whose cost is lowest is selected (operation 722). Accordingly, for the finally selected prediction mode, one prediction mode whose cost is lowest among the seven prediction modes can be selected. Accordingly, instead of performing the SPME with respect to the seven prediction modes, respectively, the SPME can be performed for the selected one prediction mode only (operation 430), so that a complexity of the ME apparatus is reduced. However, in case a number of selected prediction modes is one, there exists a dangerous factor, it is preferable to select two or more prediction modes if possible.

According to the above-described embodiment of the present invention, an ME method and an apparatus thereof, for reducing a complexity of the SPME, is provided.

According to the above-described embodiment of the present invention, since an SPME is performed after an IPME is performed, a method for reducing a complexity of the SPME by reducing prediction modes to be processed at the sub-pixel using costs obtained as a result of the IPME, is suggested.

Therefore, it is possible to reduce a complexity of the ME by reducing a number of prediction modes for which the SPME is performed, using the IPME results. Namely, it is possible to reduce a complexity of the SPME in half, by reducing a number of prediction modes for which the SPME is performed, from seven to four or below according to the method suggested by the present invention. Particularly, in case the ME apparatus is realized in form of hardware, a size and a complexity of the hardware can be reduced.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed

## Claims

1. A motion estimation (ME) method comprising:
selecting at least one prediction mode whose integer pixel motion estimation (IPME) result cost is relatively low among a plurality of prediction modes based on IPME results for each of the plurality of prediction modes including blocks of various sizes; and
performing a sub-pixel motion estimation (SPME) using the selected at least one prediction mode.

2. The method of claim 1, wherein the plurality of prediction modes includes a 16x16 prediction mode, a 16x8 prediction mode, an 8x16 prediction mode, an 8x8 prediction mode, an 8x4 prediction mode, a 4x8 prediction mode, and a 4x4 prediction mode.

3. The method of claim 2, wherein, in the predicting, for the prediction mode for which the SPME is performed, a 16x16 prediction mode, a 16x8 prediction mode, and an 8x16 prediction mode, are selected and one prediction mode having the lowest IPME result cost is also selected among an 8x8 prediction mode, an 8x4 prediction mode, a 4x8 prediction mode, and a 4x4 prediction mode.

4. The method of claim 2, wherein, in the predicting, for the prediction mode for which the SPME is performed, a 16x16 prediction mode is selected, and one prediction mode having the lowest IPME result cost is also selected among a 16x8 prediction mode and an 8x16 prediction mode, and one prediction mode having the lowest IPME result cost among an 8x8 prediction mode, an 8x4 prediction mode, a 4x8 prediction mode, and a 4x4 prediction mode, is also selected.

5. The method of claim 2, wherein, in the predicting, for the prediction mode for which the SPME is performed, one prediction mode having the lowest IPME result cost is selected among a 16x16 prediction mode, a 16x8 prediction mode, and a 8×16 prediction mode, and one prediction mode having the lowest IPME result cost is also selected among a 8x8 prediction mode, an 8x4 prediction mode, a 4x8 prediction mode, and a 4x4 prediction mode.

6. The method of claim 2, wherein, in the predicting, for the prediction mode for which the SPME is performed, one prediction mode having the lowest IPME result cost is selected among a 16x16 prediction mode, a 16x8 prediction mode, an 8x16 prediction mode, an 8x8 prediction mode, an 8x4 prediction mode, a 4x8 prediction mode, and a 4x4 prediction mode.

7. The method of any preceding claim, wherein the IPME and the SPME conform to an H.264 standard.

8. A method of encoding video, comprising:
performing an integer pixel motion estimation (IPME) on each of a plurality of prediction modes having blocks of various sizes;
selecting at least one prediction mode whose cost is relatively low among the plurality of prediction modes, using IPME result costs; and
performing a sub-pixel motion estimation (SPME) using the selected at least one prediction mode.

9. The method of claim 8, wherein the plurality of prediction modes includes a 16x16 prediction mode, a 16x8 prediction mode, an 8x16 prediction mode, an 8x8 prediction mode, an 8x4 prediction mode, a 4x8 prediction mode, and a 4x4 prediction mode.

10. The method of claim 9, wherein the selecting the prediction mode includes:
selecting a 16x16 prediction mode, a 16x8 prediction mode, and an 8x16 prediction mode; and
selecting one prediction mode having the lowest IPME result cost among an 8x8 prediction mode, an 8x4 prediction mode, a 4x8 prediction mode, and a 4x4 prediction mode.

11. The method of claim 9, wherein the selecting the prediction mode includes:
selecting a 16x16 prediction mode;
selecting one prediction mode having the lowest IPME result cost among a 16x8 prediction mode and an 8x16 prediction mode; and
selecting one prediction mode having the lowest IPME result cost among an 8x8 prediction mode, an 8x4 prediction mode, a 4x8 prediction mode, and a 4x4 prediction mode.

12. The method of claim 9, wherein the selecting the prediction mode includes:
selecting one prediction mode having the lowest IPME result cost among a 16x16 prediction mode, a 16x8 prediction mode, and an 8x16 prediction mode; and
selecting one prediction mode having the lowest IPME result cost among an 8x8 prediction mode, an 8x4 prediction mode, a 4x8 prediction mode, and a 4x4 prediction mode.

13. The method of claim 9, wherein the selecting the prediction mode includes:
selecting one prediction mode having the lowest IPME result cost among a 16x16 prediction mode, a 16x8 prediction mode, an 8x16 prediction mode, an 8x8 prediction mode, an 8x4 prediction mode, a 4x8 prediction mode, and a 4x4 prediction mode.

14. The method of any of claims 8 to 13, wherein the IPME and the SPME conform to an H.264 standard.

15. A motion estimation (ME) apparatus, comprising:
a prediction mode selection section (306)selecting at least one prediction mode whose integer pixel motion estimation (IPME) result costs are relatively low from among a plurality of prediction modes, using IPME results for a plurality of prediction modes including blocks of various sizes; and
a sub-pixel motion estimation section (308) performing a sub-pixel motion estimation (SPME) using the selected at least one prediction mode.

16. An apparatus for encoding video, comprising:
a motion estimation (ME) block (302) performing an integer pixel motion estimation (IPME) with respect to each of a plurality of prediction modes having blocks of various sizes; selecting at least one prediction mode whose cost is relatively low among a plurality of prediction modes, using IPME result costs; and performing a sub-pixel motion estimation (SPME) using the selected at least one prediction mode.

17. A motion estimation apparatus, comprising:
an integer pixel motion estimation block (302) performing motion estimation for an integer pixel of a signal;
a cost calculating section (304) calculating costs of the integer pixel motion estimation;
a prediction mode selecting section (306) selecting at least one prediction mode to be used for sub-pixel motion estimation according to costs of the integer pixel motion estimation; and
a sub-pixel motion estimation section (308) performing motion estimation on a sub-pixel of the integer pixel using the selected at least one prediction mode.
